# EUROPÄISCHE PATENTANMELDUNG

(11) **EP 3 287 006 A1**
(43) Veröffentlichungstag der Anmeldung: **28.02.2018**
(21) Anmeldenummer: 16185373.4
(22) Anmeldetag: 23.08.2016
(51) Int. Cl.: A01M 1/02, A01M 1/14

(54) **BLATTFLOHFALLE**

(71) Anmelder: IS Insect Services GmbH, 12277 Berlin (DE)
(72) Erfinder: Dippel, Cornelia, 12161 Berlin (DE); Gross, Jürgen, 69198 Schriersheim (DE)
(74) Vertreter: Müller & Schubert

(57) **Zusammenfassung**

Gegenstand der vorliegenden Erfindung ist eine Falle für Blattflöhe, in Form eines Hohlkörpers, wobei der Hohlkörper mindestens eine Außenfläche aufweist, welche den Hohlkörper bildet, der Hohlkörper eine Öffnung an der Oberseite und eine Öffnung an der Unterseite aufweist, wobei die jeweiligen Öffnungen mittels weiterer Deckflächen verschließbar sind. Die Falle besteht aus transparentem Material und ist an der Außenseite mit Insektenleim versehen.

Die erfindungsgemäße Falle dient zum Monitoring von Blattflöhen.

## Beschreibung

Die vorliegende Erfindung betrifft eine Falle für Blattflöhe sowie die Verwendung der Falle zum Monitoring von Blattflöhen.

Phloemsaugende Insekten aus der Gattung *Cacopsylla* stellen eine große Bedrohung im Erwerbsobstbau dar. Neben dem durch den Saugvorgang dieser Blattflöhe verursachten Primärschaden können sie beim Saugvorgang zellwandlose Bakterien (Phytoplasmen) übertragen, welche zu einer Reihe von Erkrankungen von Obstbäumen wie Apfeltriebsucht (AP), Birnenverfall (PD) und der Europäischen Steinobstvergilbung (ESFY) führen. Die durch die Phytoplasmen verursachten Krankheiten können starke Ernteausfälle bedingen und somit immense Kosten verursachen. Eine direkte Bekämpfung der Bakterien ist nicht möglich. Zum Schutz der Pflanzen müssen die jeweiligen Überträger der Krankheiten, die Vektoren, bekämpft werden.

Die Biologie und Ökologie der Blattflöhe ist sehr komplex. Die Blattflöhe fliegen Mitte März bis Anfang Mai in die Obstanlagen ein. Dort paaren sich die Tiere und legen ihre Eier an die Blätter der Reproduktionswirtspflanzen ab. Nach dem Durchlaufen von fünf Nymphenstadien erscheinen meist ab Ende Mai die ersten geflügelten Tiere der neuen Generation. Sie bleiben noch für einige Zeit in den Anlagen und saugen am Phloem (Siebröhren) ihrer Wirtspflanzen, bevor sie ihren ersten Wanderungsflug unternehmen. Ab Anfang Juli sind bereits keine Sommerapfelblattsauger (C. *picta)* in den Anlagen mehr zu finden, und auch die Pflaumenblattsauger (*C*. *pruni)* und der Große Birnblattsauger (*C*. *pyrisuga)* verschwinden bald aus den Obstanlagen. Einige Birnblattsauger (*C*. *pyri, C. pyricola)* dagegen vermehren sich weiter in den Obstanlagen und bilden weitere darauffolgende Generationen. Der Flug führt die emigrierenden Blattsauger ("Abwanderer" oder "Emigrants") zu Nadelbäumen, die sich bevorzugt in höheren Lagen befinden. Dort verbringen sie den Rest des Sommers, den Herbst und Winter auf verschiedenen Nadelbäumen (Fichte, Kiefer, Tanne, Douglasie). Über die Biologie der Tiere außerhalb der Obstanlagen (z.B. ob dort auch Nahrung aufgenommen wird) ist so gut wie nichts bekannt. Im Frühjahr unternehmen die Tiere ihren zweiten Wanderungsflug und fliegen wieder in die Obstanlagen ein ("Rückkehrer" oder "Remigrants"), um sich dort erneut zu vermehren.

Trotz der wachsenden wirtschaftlichen Bedeutung der Krankheiten (ESFY, AP und PD) konnte bislang keine befriedigende Bekämpfungsstrategie entwickelt werden. Aus ökonomischer Sicht ist aber eine Bekämpfung unbedingt geboten, um die Ernteausfälle zu reduzieren. Die Vektoren der Kernobstphytoplasmosen werden bisher ausschließlich mit chemischen Insektiziden bekämpft. Der Einsatz von Insektiziden birgt aber zum einen große Nachteile bei der Vermarktung des Erntegutes, insbesondere vor dem Hintergrund der aktuell intensiv diskutierten Reduktion der Rückstände von Pflanzenschutzmitteln in Obst und Gemüse. Zum anderen stellt der ungünstige Bekämpfungszeitpunkt ein weiteres Problem dar. Die Übertragung der Phytoplasmen auf die Kulturpflanzen erfolgt beim Steinobst während der Blütezeit, somit kann es bei einem Insektizideinsatz in dieser Zeit zusätzlich zu einer Gefährdung der Bestäuberinsekten (z.B. Bienen) kommen.

Neben dieser allgemeinen Problematik des Einsatzes von Pestiziden ist hervorzuheben, dass gegen den Birnblattsauger zurzeit nur ein Wirkstoff (Spirodiclofen) zugelassen ist, so dass hier auch die Gefahr einer Resistenzbildung sehr hoch ist. Daher sollte der Einsatz möglichst genau terminiert werden und nicht prophylaktisch erfolgen. Zur Bekämpfung des Vektors der Apfeltriebsucht steht insbesondere in Deutschland kein zugelassenes Produkt zur Verfügung. Auch gegen C. *pruni,* den Vektor der Steinobstvergilbung, gibt es keine geprüften oder zugelassenen Insektizide. Hier können aber Nebenwirkungen anderer Mittel ausgenutzt werden. Da krankheitsresistente Sorten bis auf weiteres ebenfalls nicht zur Verfügung stehen, kann eine Bekämpfung der Ausbreitung der Krankheit nur präventiv erfolgen, in dem die Übertragung durch den Vektor verhindert wird. Für den Fang von pflanzensaftsaugenden Insekten sind bisher aber keine artspezifischen Fallensysteme erhältlich. Aufgrund der spezifischen Verhaltenseigenschaften von phloemsaugenden Insekten sind diese mit herkömmlichen Fallentypen nur schlecht bzw. gar nicht zu fangen. Für Blattsauger sind keine Fallensysteme erhältlich, lediglich Blattläuse können mit einigen Fallen unspezifisch gefangen werden.

Aufgabe der vorliegenden Erfindung ist es daher eine Vorrichtung für die Ermittlung des optimalen Zeitpunkts für die Bekämpfung der Blattflöhe mit Insektiziden zur Verfügung zu stellen. Dies kann bisher nur über die Methodik der Klopfprobe erfolgen, die aber im Vergleich zur vorgestellten Erfindung deutlich geringere Fangzahlen aufweist und daher mit großen Fehlern bezüglich des Nachweises der Schädlinge als auch deren Populationsstärke behaftet ist. Dies wird im weiteren genauer ausgeführt.

### Definitionen

In der vorliegenden Beschreibung werden eine Reihe von Begriffen verwendet, welche im Sinne der vorliegenden Erfindung die folgenden Bedeutungen haben.

Blattflöhe im Sinne der vorliegenden Erfindung sind alle Arten der Gattung *Cacopsylla,* welche als phloemsaugende Insekten auftreten. Hierzu zählen insbesondere die Arten Sommerapfelblattsauger *(Cacopsylla picta),* Pflaumenblattsauger *(Cacopsylla pruni),* Großer Birnblattsauger (*Cacopsylla pyrisuga),* Gemeiner Birnblattsauger (*Cacopsylla pyri*) und Gefleckter (Kleiner) Birnblattsauger (*Cacopsylla pyricola*).

Der Begriff Riechstoffe im Sinne der Erfindung bezeichnet Stoffe, welche eine olfaktorische Verhaltensantwort bei den untersuchten Insekten hervorrufen. Diese Riechstoffe müssen nicht ausschließlich mit dem beim Menschen bekannten Geruchssinn wahrnehmbar sein. Vielmehr können bei Insekten oder anderen Tieren derartige Riechstoffe mit vollkommen anderen Organen oder Körperteilen wahrgenommen werden. Dies ist beispielsweise bei der Zecke das Haller'sche Organ im ersten Beinpaar und bei vielen Insekten sind dies z. B. Chemorezeptoren an den Antennen, den Füßen oder am Ovipositor. Im Sinne der Erfindung genügt es, wenn das Zielinsekt den Riechstoff wie auch immer wahrnehmen kann, und dass dieser Riechstoff dann gegebenenfalls eine olfaktorische Verhaltensantwort hervorruft. Die in der vorliegenden Erfindung verwendeten Riechstoffe sind Pflanzenduftstoffe, welche entweder den Obstarten (Steinobst, Kernobst), welche von den Blattflöhen befallen werden, oder den Überwinterungsnadelgehölzen (Fichte, Kiefer, Tanne, Douglasie) entstammen. Diese Riechstoffe können den unterschiedlichsten chemischen Substanzklassen angehören. Sehr häufig handelt es sich dabei um Monoterpene und Sesquiterpene. Derartige Terpene und Terpenoide sind Polymerisationsprodukte von Isopren und werden vielfältig von Pflanzen gebildet.

"Green Leaf Volatiles" oder Grüne Blattduftstoffe bezeichnet eine auf C₆-Körpern basierende Gruppe von Alkoholen und Aldehyden mit den typischen Verbindungen (Z)-3-Hexenylacetat, (Z)-3-Hexen-1-ol, (E)-3-Hexenylacetat, (E)-2-Hexenylacetat, (E)-3-Hexen-1-ol, (E)-3-Hexenal, (E)-2-Hexen-1-ol, (Z)-3-Hexenal, (E)-2-Hexenal, (Z)-2-Hexen-1-ol, und (Z)-2-Hexenal. Im Sinne der Erfindung werden darüber hinaus auch Kombinationen mit weiteren linearen, verzweigten, gesättigten und/oder ungesättigten Hexanderivaten verstanden, welche gegebenenfalls derivatisiert sein können. Es sind beispielsweise (Z)-3-Hexenylformiat, (E)-2-Hexenylformiat, (Z)-3-Hexenylbutanoat, (E)-2-Hexenylbutanoat, (Z)-3-Hexenyl-2-methylbutanoat, (E)-2-Hexenyl-2-methylbutanoat, (Z)-3-Hexenyl-3-methylbutanoat, (E)-2-Hexenyl-3-methylbutanoat, (Z)-3-Hexenylhexanoat, (E)-2-Hexenylhexanoat, Hexylacetat, Hexylformiat, Hexylpropionat, Hexylbutanoat, Hexyl-2-methylbutanoat, Hexyl-3-methylbutanoat, Hexylhexanoat, Hexan-1-ol, Hexan-2-ol, Hexan-3-ol, Hexanal sowie deren allfällige Isomere, Stereoisomere, Diastereomere oder Enantiomere und beliebige Mischungen aus den zuvor genannten Substanzen.

Aufgabe der vorliegenden Erfindung ist es, eine Falle für Blattflöhe, insbesondere zum Monitoring von Blattflöhen zur Verfügung zu stellen, welche eine hohe Spezifität für Blattflöhe aufweist.

Die Aufgabe wird durch die Bereitstellung einer Falle für Blattflöhe gelöst, welche die Merkmale des Hauptanspruchs aufweist. Vorteilhafte Weiterbildungen der erfindungsgemäßen Falle für Blattflöhe sind in den abhängigen Unteransprüchen gekennzeichnet.

Gegenstand der vorliegenden Erfindung ist eine Falle für Blattflöhe, in Form eines Hohlkörpers, wobei der Hohlkörper mindestens eine Außenfläche aufweist, welche den Hohlkörper bildet, der Hohlkörper eine Öffnung an der Oberseite und eine Öffnung an der Unterseite aufweist, wobei die jeweiligen Öffnungen mittels weiterer Deckflächen verschließbar sind.

Erfindungsgemäß besonders bevorzugt ist eine Falle, wobei die Falle aus transparentem Material besteht.

Ein besonders bevorzugter Gegenstand der vorliegenden Erfindung ist eine Falle für Blattflöhe, in Form eines Hohlkörpers, wobei der Hohlkörper mindestens eine Außenfläche aufweist, welche den Hohlkörper bildet, der Hohlkörper eine Öffnung an der Oberseite und eine Öffnung an der Unterseite aufweist, wobei die jeweiligen Öffnungen mittels weiterer Deckflächen verschließbar sind, und wobei der Hohlkörper und/oder eine Deckfläche und/oder die weiteren Deckflächen aus einem transparenten Material bestehen oder gebildet sind.
Besonders bevorzugt ist hierbei, dass der Hohlkörper und die weiteren Deckflächen alle aus einem transparenten Material gebildet sind.

Besonders bevorzugt ist dabei, dass das Material ausgewählt ist aus Glas, Polymethylmethacrylat (PMMA), Polyethylenterephthalat (PET), Polybutylenterephthalat (PBT), Polymethylpenten (PMP), Harnstoff-Formaldehydharz (UP), Polyetherimid (PEI), Polycarbonat (PC), Polyvinylchlorid (PVC), Polystyrol (PS), Polyphenylenether (PPE) und Polyethylen (PE). Auch können Mischungen der vorgenannten Materialien verwendet werden. Dem Fachmann sind weitere Kunststoffe bekannt, welche transparent sind. Dies können auch Copolymerisate sein, welche Monomere der vorgenannten Polymere oder Copolymere enthalten.

Weiterhin ist erfindungsgemäß bevorzugt, dass die Fläche der weiteren Deckfläche an der Oberseite der Falle größer ist als die Fläche der weiteren Deckfläche an der Unterseite der Falle.

Insbesondere bevorzugt ist eine erfindungsgemäße Falle, wobei der Hohlkörper im Wesentlichen zylindrisch ausgestaltet ist und/oder dass die weiteren Deckflächen scheibenförmig ausgebildet sind.

Weiterhin bevorzugt ist eine erfindungsgemäße Falle, gemäß Anspruch 1, wobei der Querschnitt des Hohlkörpers im Wesentlichen kreisförmig, oval, quadratisch, rechteckig, dreieckig, fünfeckig, sechseckig oder achteckig ausgestaltet ist und/oder dass die weiteren Deckflächen kreisförmig, oval, quadratisch, rechteckig, dreieckig, fünfeckig, sechseckig oder achteckig ausgebildet sind.

Ganz besonders bevorzugt ist eine erfindungsgemäße Falle, wobei die Außenfläche und/oder eine der weiteren Deckflächen mindestens eine lochartige Öffnung aufweist.

Bevorzugt ist dabei, dass der Durchmesser der zumindest einen lochartigen Öffnung 0,5 cm, bevorzugt 1 cm und besonders bevorzugt 1,5 cm beträgt.

Erfindungsgemäß bevorzugt ist ferner eine Falle, die als Klebefalle ausgebildet ist.

Bevorzugt ist dabei, dass das Klebemittel an der mindestens einen Außenfläche des Hohlkörpers angeordnet ist.

Besonders bevorzugt ist dabei, dass das Klebemittel Insektenleim ist.

Ganz besonders bevorzugt ist eine Falle, bei der das Klebemittel als Mehrfachfolie ausgebildet ist, wobei jeder der Folien der Mehrfachfolie mit Kleber bestückt ist.

Bevorzugt ist auch eine erfindungsgemäße Falle, wobei in dem Hohlkörper mindestens ein Lockstoffdispenser angeordnet ist, wobei der Lockstoffdispenser mindestens einen Riechstoff enthält.

Dabei ist ebenfalls bevorzugt, dass die Riechstoffe in dem Lockstoffdispenser gattungsspezifisch sind.

Bevorzugt ist dabei ferner, dass die gattungsspezifischen Riechstoffe zumindest zum Teil ausgewählt sind aus "Green Leaf Volatiles", "Green Leaf Volatiles" in Kombination mit linearen, verzweigten, gesättigten und/oder ungesättigten Hexanderivaten, ungesättigten Kohlenwasserstoffen, Terpenoiden und deren Derivaten, Sesquiterpenen und deren Derivaten, Alkohole sowie Mischungen der vorgenannten Riechstoffe.

Gegenstand der vorliegenden Erfindung ist ferner die Verwendung einer erfindungsgemäßen Falle zum Monitoring von Blattflöhen.

Gegenstand der vorliegenden Erfindung ist aber auch die Verwendung einer erfindungsgemäßen Falle zum Fangen von Blattflöhen.

Die vorliegende Erfindung wird mit den beigefügten Zeichnungen und Diagrammen näher erläutert. Es zeigt:
Fig. 1 zeigt eine perspektivische Seitenansicht einer ersten Ausführungsform einer erfindungsgemäßen Falle 1.
Fig. 2 zeigt eine Längsschnittansicht einer ersten Ausführungsform der erfindungsgemäßen Falle 1.
Fig. 3 zeigt eine Aufsicht auf die Unterseite einer ersten Ausführungsform der erfindungsgemäßen Falle 1.
Fig. 4 zeigt eine perspektivische Aufsicht einer zweiten Ausführungsform einer erfindungsgemäßen Falle 10.
Fig. 5 zeigt eine Längsschnittansicht einer zweiten Ausführungsform der erfindungsgemäßen Falle 10.
Fig. 6 zeigt eine perspektivische Aufsicht einer dritten Ausführungsform einer erfindungsgemäßen Falle 100.
Fig. 7 zeigt eine perspektivische Aufsicht einer vierten Ausführungsform einer erfindungsgemäßen Falle 110.
Figuren 8a bis 8e zeigen Querschnitte der Hohlkörper weiterer Ausführungsformen der erfindungsgemäßen Falle.
   Fig. A (Diagramm) zeigt die Anzahl der im Jahr 2016 gefangenen Individuen von C. *picta* pro erfindungsgemäßer Falle 10 mit Lockstoff (schwarze Balken) oder Klopfproben (schraffierte Balken) in Apfelbäumen. Eine Falle oder eine Klopfprobe (jeweils drei Schläge auf einen Ast pro Baum) entspricht einem Baum.
   Fig. B (Diagramm) zeigt die Anzahl der im Jahr 2015 gefangenen *C*. *picta* Individuen pro erfindungsgemäßer Falle 10 (schraffierte Balken) oder Klopfprobe (weiße Balken) in Apfelbäumen in einem Versuchsfeld. Eine Falle oder eine Klopfprobe (jeweils drei Schläge auf einen Ast pro Baum) entspricht einem Baum.
   Fig. C (Diagramm) zeigt die Anzahl der im Jahr 2015 gefangenen Individuen von *C*. *pruni* pro erfindungsgemäßer Falle 10 (schraffierte Balken) oder Klopfprobe (weiße Balken) auf einem Versuchsfeld mit Steinobst (auf zwei verschiedenen Unterlagen). Eine Falle oder eine Klopfprobe (jeweils drei Schläge auf einen Ast pro Baum) entspricht einem Baum.
   Fig. D (Diagramm) zeigt die Anzahl gefangener Marienkäfer pro Rebellfalle (schwarze Balken, n=20, Falle ist im Handel erhältlich) in Apfel- und Pfirsichbäumen in einer Versuchsanlage und in erfindungsgemäßen Fallen in Apfelbäumen in einem Feld (weiße Balken, n=60). * kennzeichnen signifikante Unterschiede (Mann-Whitney-U Test, ** P<0,01, *p<0,5).
   Fig. E (Diagramm) zeigt in erfindungsgemäßen Fallen gefangene nützliche Insekten aus dem Versuchsjahr 2015 in Apfelbäumen in einem Versuchsfeld.

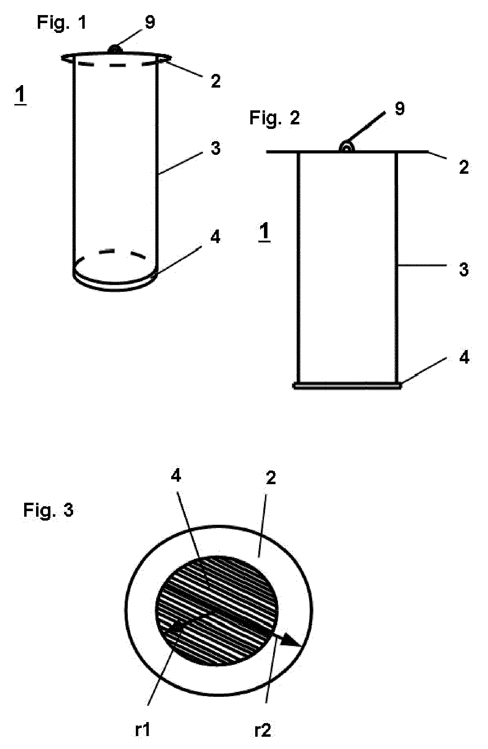

Nachfolgend werden unter Bezugnahme auf die angefügten Figuren 1 bis 8e Ausführungsformen der erfindungsgemäßen Falle näher beschrieben.

Ein erstes Ausführungsbeispiel einer erfindungsgemäßen Falle ist in den Figuren 1 und 2 dargestellt. Figur 1 ist eine perspektivische Ansicht einer ersten Ausführungsform der Falle gemäß der Erfindung. Figur 2 ist eine Längsschnittansicht der in Figur 1 gezeigten Ausführungsform. Die Falle 1 besteht im Wesentlichen aus einem zylindrischen Körper, wobei der zylindrische Körper eine Außenfläche 3 in Form eines Zylindermantels aufweist. Der zylindrische Körper umfasst weiterhin eine Unterseite oder Boden 4, womit der zylindrische Körper verschlossen wird. Weiterhin ist an der Oberseite des Zylinders ein Deckel 2 angeordnet, welcher lösbar mit dem zylindrischen Körper verbunden sein kann. An der Oberseite des Deckels 2 ist vorzugsweise eine Aufhängung 9 vorgesehen, mithilfe derer die erfindungsgemäße Falle an einer geeigneten Position innerhalb der Obstplantage aufgehängt werden kann. Der gesamte Fallenkörper 1 besteht vorzugsweise aus einem durchsichtigen oder transparenten Material. Geeignete Materialien sind Kunststoffe aller Art, sofern diese durchsichtig oder transparent sind. Insbesondere geeignet sind Kunststoffe wie Polymethylmethacrylat (PMMA), Polyethylenterephthalat (PET), Polybutylenterephthalat (PBT), Polymethylpenten (PMP), Harnstoff-Formaldehydharz (UP), Polyetherimid (PEI), Polycarbonat (PC), Polyvinylchlorid (PVC), Polystyrol (PS), Polyphenylenether (PPE) oder Polyethylen (PE) oder deren Mischungen sowie aber auch Glas. Dabei können die einzelnen Bestandteile der Falle 1, wie Zylindermantel 3, Deckel 2, Boden 4 oder Aufhängung 9 aus jeweils unterschiedlichen Materialien bestehen.

Weiterhin ist zumindest auf der Außenseite des Mantels 3 ein geeignetes Klebemittel (nicht gezeigt) aufgebracht. Als Klebemittel können herkömmliche Insektenleime verwendet werden. Es ist ebenfalls vorgesehen, dass auf der Außenseite des Mantels 3 eine Klebefolie aufgebracht wird, welche auf der einen Seite ein Haftmittel zur Befestigung am Mantel 3 und auf der anderen Seite der Folie ein Klebemittel zum Fangen der Insekten aufweist. Besonders vorteilhaft ist es, wenn die Klebefolie als Mehrfachfolie ausgebildet ist, wobei nach Benutzung jeweils eine Schicht der Klebefolie entfernt werden kann, um danach eine neue Klebeschicht bereitzustellen.

In der Figur 3 ist eine Aufsicht auf den Bodenteil 4 der erfindungsgemäßen Falle 1 gezeigt. Es ist vorgesehen, dass der Deckel 2 und der Boden 4 unterschiedliche Radien r1 und r2 aufweisen. Vorteilhafterweise ist der Radius r2 des Deckels 2 größer als der Radius r1 des Bodens 4. Die größere Fläche des Deckels 2 ist vorteilhaft, weil dadurch auf die Falle 1 herabfallende Gegenstände, wie Blätter oder Regentropfen, nicht auf die Außenfläche 4, also die Mantelfläche, auftreffen. Dadurch wird verhindert, dass die Klebeleistung des aufgebrachten Klebemittels verringert wird.

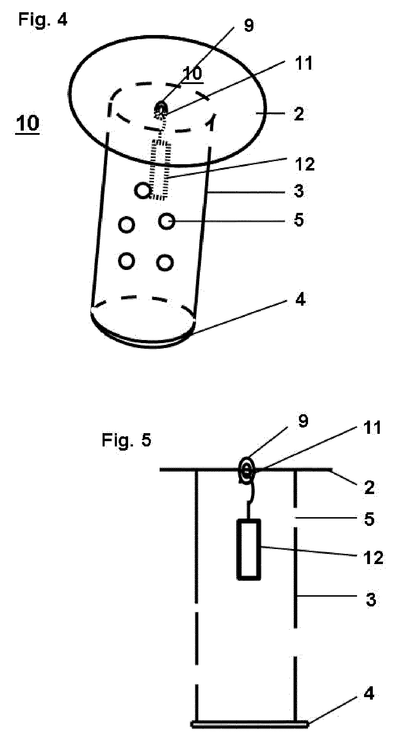

Die Figuren 4 und 5 zeigen eine zweite Ausführungsform einer erfindungsgemäßen Falle 10. Figur 4 ist eine perspektivische Aufsicht einer zweiten Ausführungsform der Falle gemäß der Erfindung. Figur 5 ist eine Längsschnittansicht der in Figur 4 gezeigten Ausführungsform. Die Falle 10 weist wiederum eine zylindrische Form auf. Auch die weiteren Deckflächen 2 und 4 sind kreisförmig ausgestaltet. Im Inneren der Falle 10 ist ein Dispenser 12 angeordnet, welcher an einer Halterung 11 angehängt ist. Dispenser 12 ist erfindungsgemäß mit einem Lockmittel in Form von Riechstoffen beschickt. Hierzu weist der Zylindermantel 3 Öffnungen 5 auf, durch welche hindurch die Riechstoffe aus dem Dispenser 12 entweichen und verströmen können. Es kann vorgesehen sein, dass das Abgabegefäß (Dispenser) 12 mit einer Lockfarbe, beispielsweise gelb, versehen ist, welche für die jeweilige Blattflohart spezifisch sein kann.

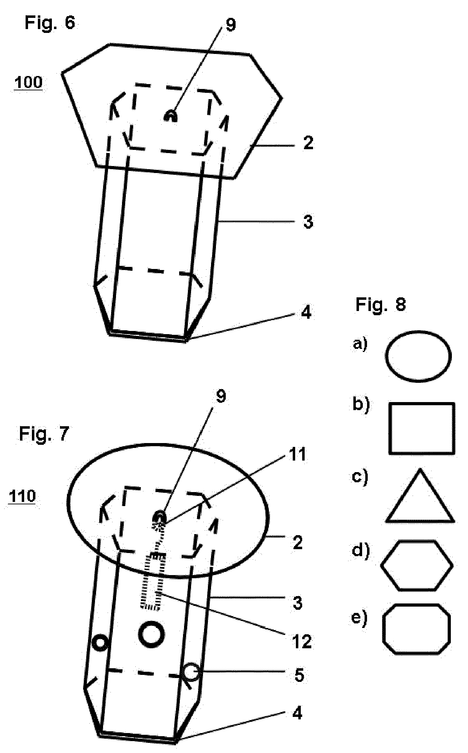

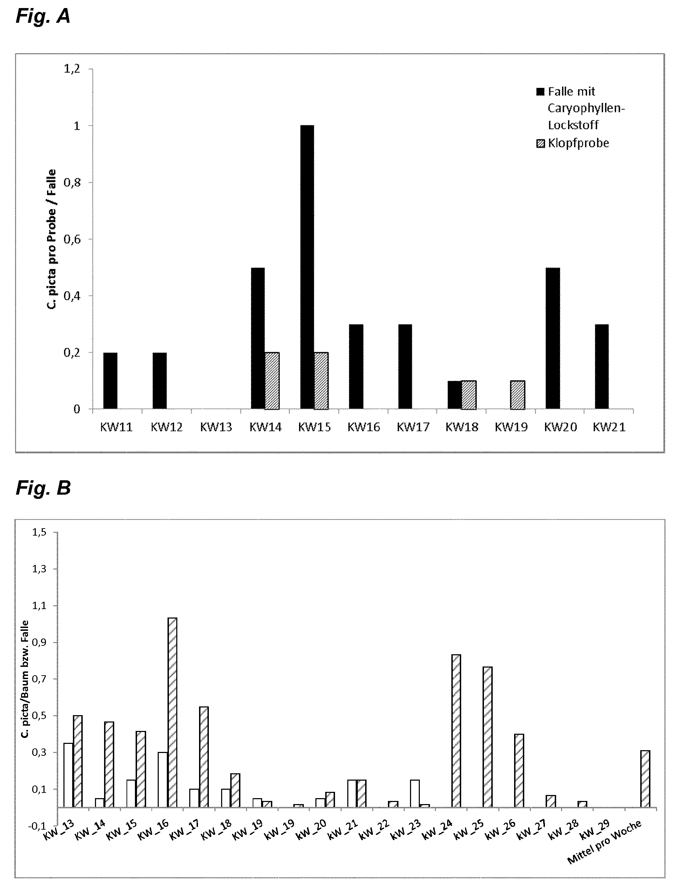

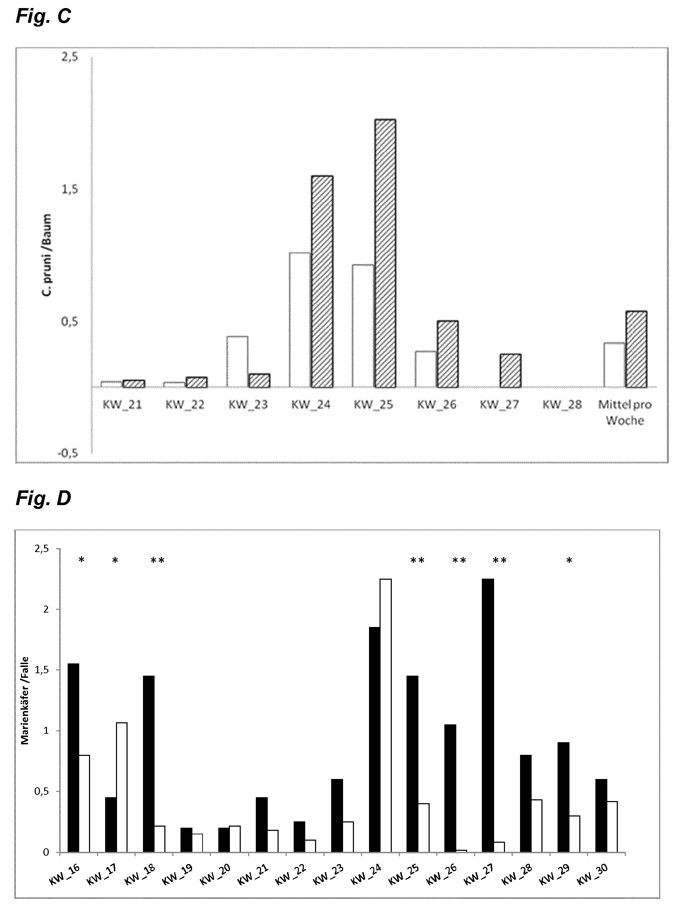

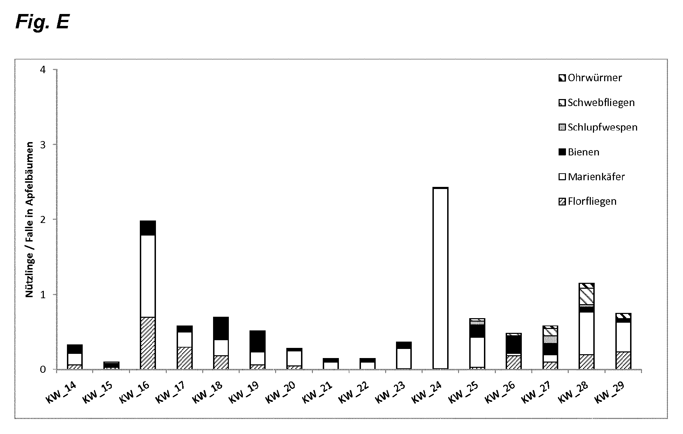

Figur 6 ist eine weitere Ausführungsform einer erfindungsgemäßen Falle. Falle 100 besteht aus sechs Außenflächen 3, welche zusammen einen Hohlkörper mit einer sechseckigen Grundfläche bilden. Boden 4 der Falle 100 und Deckel 2 weisen ebenfalls eine sechseckige Form auf. Dabei ist die Fläche der weiteren Deckfläche 2, nämlich Deckel 2, größer als die weitere Deckfläche 4, nämlich Boden 4. Die gezeigte Ausführungsform der Falle 100 weist keine Löcher in den Außenflächen auf. Allerdings ist die Falle 100 wiederum aus einem transparenten Material gebildet und auf der Außenfläche mit einem Klebemittel versehen.

Figur 7 ist eine weitere Ausführungsform einer erfindungsgemäßen Falle. Falle 110 besteht aus sechs Außenflächen 3, welche zusammen einen Hohlkörper mit einer sechseckigen Grundfläche bilden. In den Außenflächen sind Löcher 5 ausgebildet. Boden 4 der Falle 110 weist ebenfalls eine sechseckige Form auf, während Deckel 2 in dieser Ausführungsform der Falle 110 kreisförmig ausgebildet ist. Im Inneren der Falle 110 ist ein Dispenser 12 mittels der Halterung 11 angeordnet. Auch Falle 110 ist aus einem transparenten Material gebildet und auf der Außenfläche mit einem Klebemittel versehen.

Figuren 8a) bis 8e) zeigen verschiedene Querschnitts- und Grundrissformen weiterer Ausführungsformen der erfindungsgemäßen Falle für Blattflöhe. Die Außenflächen 3 können erfindungsgemäß derart ausgestaltet sein, dass die Querschnitte des Hohlkörpers oval (Fig. 8a), rechteckig (Fig. 8b), dreieckig (Fig. 8c), sechseckig (Fig. 8d) oder achteckig (Fig. 8e) sind. Die in den Figuren 8a) bis 8e) gezeigten Grundrisse verschiedener geometrischer Formen können auch geeignet sein, entsprechende Formen von Deckeln 2 oder Böden 4 entsprechender erfindungsgemäßer Fallen zu bilden. Es kann erfindungsgemäß auch vorgesehen sein, für den Querschnitt des aus Außenflächen 3 gebildeten Hohlkörpers, den Deckel 2 und für den Boden 4 jeweils unterschiedliche Formen zu bilden. Derartige Ausführungsformen haben den Vorteil, dass diese der Unterscheidung der verschiedenen Ausführungsformen von erfindungsgemäßen Fallen dienen können, wenn beispielsweise unterschiedliche Lock- oder Riechstoffe in den darin angeordneten Dispensern vorgesehen sind.

Die Herstellung der erfindungsgemäßen Fallen erfolgt durch Herstellen der einzelnen Hohlkörper und Deckel. Die Hohlkörper können einen einem Teil oder aus mehreren Teilen hergestellt und dann zusammengefügt werden. Ebenso werden der jeweilige Hohlkörper und die Deckel in an sich bekannter Weise zusammengefügt. Die kann beispielsweise durch kleben, schweißen oder in anderer bekannter Weise erfolgen. Entsprechende Maßnahmen für das Zusammenfügen sind dem Fachmann bekannt.

Die nachfolgenden Beispiele erläutern die Erfindung näher, ohne den Umfang der Erfindung zu beschränken.

Es wurden mehre Feldversuche durchgeführt, um die Wirksamkeit der erfindungsgemäßen Fallen zu ermitteln. Bisher wird das Monitoring von Blattflöhen durch die sogenannte Klopfprobe durchgeführt.

### Vergleich der Fängigkeit der erfindungsgemäßen Fallen zur Klopfprobe Sommerapfelblattsauger C. picta

Die Versuche wurden in einem Versuchsfeld einer Apfelplantage durchgeführt. Gefangen und ausgewertet wurden Apfelblattsauger (C. *picta*). In der Figur A sind die jeweiligen Fangergebnisse der Klopfprobe (schraffierte Balken) und der erfindungsgemäßen Falle mit Lockstoff (schwarze Balken) der Kalenderwochen (KW) 11 bis 21 des Jahres 2016 dargestellt. Es wurden jeweils 10 Fallen ausgewertet und 10 Klopfproben (1 Probe = 1 Baum mit je drei Schlägen) durchgeführt. Es wurden Fallen verwendet, welche den in den Figuren 4 und 5 dargestellten Fallen entsprachen.
Die mit dem Lockstoff (Caryophyllen) ausgerüstete Falle fängt pro Probe im Durchschnitt 3,4 Apfelblattsauger, während eine Klopfprobe durchschnittlich nur 0,6 Tiere enthält.
Dies bedeutet, dass zum einen etwa 6mal so viele Apfelblattsauger mit der erfindungsgemäßen Falle nachgewiesen werden als mit der Klopfprobe, und zum anderen werden aufgrund der höheren Sensitivität falsch negative Proben deutlich seltener (1 bei der erfindungsgemäßen Falle im Vergleich zu 6 bei der Klopfprobe, Balken jeweils am Nullwert).
In der Grafik ist gut zu erkennen, dass mit der Falle ein fast durchgängiges Vorkommen des Sommerapfelblattsaugers von der 11. bis zur 21. Kalenderwoche (KW) nachgewiesen wurde (mit Ausnahme der 13. KW; schwarze Balken), während mit der Klopfprobe nur Einzelfunde in vier Kalenderwochen (schraffierte Balken) nachgewiesen werden konnten.

In der Figur B sind die jeweiligen Fangergebnisse aus dem Jahr 2015 dargestellt. Über den Untersuchungszeitraum von 18 Wochen wurden insgesamt 335 *C*. *picta* in 60 erfindungsgemäßen Fallen (schraffierte Balken) gefangen, dies entspricht im Mittel 5,58 (± 3,15) Individuen pro Baum (Falle). Mittels Klopfproben (weiße Balken; n=20; 1 Probe = 1 Baum mit je 3 Schlägen) konnten nur 29 Tiere in Apfelbäumen im Versuchsfeld gefangen werden, was im Mittel 1,45 Tieren pro Baum entspricht. Mit Hilfe der erfindungsgemäßen Fallen wurden somit 92 % aller insgesamt gefangenen Individuen oder die neunfache Anzahl gefangen, mit der Klopfmethode nur 8 %. Mit der erfindungsgemäßen Falle wurden über den gesamten Versuchszeitraum statistisch signifikant mehr *C*. *picta* gefangen.

Es wurden sowohl Fallen ohne als auch mit Lockstoffdispensern verwendet, die sich in der Fängigkeit nicht unterschieden.
Statistik: Vergleich der Klopfproben mit der erfindungsgemäßen Falle. Jede Kalenderwoche entspricht einer Wiederholung (n).
Verwendeter Test: Asymptotic Wilcoxon Mann-Whitney Rank Sum Test. Werte: value by variable (Klopfprobe, Mittel erfindungsgemäße Falle) Z = -2.5063, p-value = 0.0122 (signifikant).

### Spezifität der Falle:

Die Tabelle I zeigt die Fangzahlen der verschiedenen Psylliden aus Fig. B. Das Verhältnis vom Zielorganismus *C*. *picta* zu Nichtzielarten war 1 : 2.

**Tabelle I**

| Psylliden | Remigrants [%] | Emigrants [%] | Gesamt[%] |
|---|---|---|---|
| Andere Blattfloh-Arten | 73,1 | 52,0 | 66,9 |
| *C*. *picta* | 26,9 | 48,0 | 33,1 |
| Psylliden | Remigrants | Emigrants | Gesamt |
| Andere Blattfloh-Arten | 521 (8,86 pro Falle) | 158 (2,63 pro Falle) | 678 (11,3 pro Falle) |
| *C*. *picta* | 192 (3,2 pro Falle) | 146 (2,43 pro Falle) | 335 (5,58 pro Falle) |

### Pflaumenblattsauger C. pruni

Figur C zeigt die Anzahl der im Jahr 2015 gefangenen Individuen von *C*. *pruni* pro Falle (schraffierte Balken) oder Klopfprobe (weiße Balken) auf einem Versuchsfeld mit Steinobst (auf zwei verschiedenen Unterlagen). Über den Untersuchungszeitraum von 8 Wochen wurden insgesamt 184 *C*. *pruni* mit je 40 erfindungsgemäßen Fallen 10 gefangen. Dagegen wurden in je 55 Klopfproben (1 Probe = 1 Baum mit je 3 Schlägen) nur 147 Tiere auf den beiden Unterlagen Wavit und GF655/2 ausgezählt. Das entspricht im Mittel 0,575 Tieren in erfindungsgemäßen Fallen und 0,334 *C*. *pruni* Individuen in Klopfproben, jeweils pro Woche und Baum.

### Nebenfänge nützlicher Insekten

Da es sich bei der erfindungsgemäßen Falle um eine Klebefalle handelt, sind unbeabsichtigte Nebenfänge von Nützlingen nicht zu vermeiden. Die Zahl wurde mit einer handelsüblichen Rebellfalle (Fallentyp: "Rebell amarillo", gelbe Klebetafel, Hersteller: Andermatt Biocontrol) verglichen, wie sie beispielsweise zum Monitoring der Kirschfruchtfliege verwendet wird.

### Marienkäfer

Im Vergleich fangen die erfindungsgemäßen Fallen weniger Marienkäfer als die Rebellfallen. Dabei wurden die Rebellfallen auf einer gepflegten Anlage, auf der Pflanzenschutz betrieben wird, getestet, auf der also geringe Populationen von Nützlingen zu erwarten sind. Die erfindungsgemäßen Fallen hingegen wurden an zwei Standorten untersucht, an denen kein Pflanzenschutz betrieben wird, was höhere Dichten von Nützlingen zur Folge hat. Rund um die Apfelbäume im zweiten Versuchsfeld wurde zusätzlich Raps angebaut, was ebenfalls ein Ansteigen der Population von verschiedenen Nützlingen zur Folge hat. Trotz dieser die Rebellfallen favorisierenden Bedingungen wurden über den gesamten Untersuchungszeitraum mit Rebellfallen 14,05 ± 5,50 Marienkäfer gefangen, dies sind signifikant mehr als sich über den gleichen Zeitraum in den erfindungsgemäßen Fallen befanden (7,40 ± 5,90) (Mann-Whitney-U Test, p < 0,05).
Die Ergebnisse sind in Figur D dargestellt. Figur D zeigt die Anzahl gefangener Marienkäfer pro Rebellfalle (schwarze Balken, n=20, Falle ist im Handel erhältlich) in Apfel- und Pfirsichbäumen in einer Versuchsanlage und erfindungsgemäßen Fallen in Apfelbäumen in einem Versuchsfeld (weiße Balken, n=60). * kennzeichnen signifikante Unterschiede (Mann-Whitney-U Test, ** P<0,01, *p<0,5).

### Weitere Nützlinge

In der Figur E sind die Fangzahlen weiterer Nützlinge dargestellt. Figur E zeigt in erfindungsgemäßen Fallen gefangene nützliche Insekten aus dem Versuchsjahr 2015 in Apfelbäumen in einem Versuchsfeld. Auch hier ist zu erkennen, dass die Anzahl an gefangenen Nützlingen relativ gering ist.

Überraschenderweise wurde gefunden, dass die erfindungsgemäße Ausgestaltung der Falle für Blattflöhe hohe Fangzahlen für diese liefert, im Gegensatz hierzu jedoch relativ geringe Fangzahlen an Nützlingen und anderen Insekten aufweist. Die Erfinder vermuten, dass dies mit der Transparenz der Falle zusammenhängt. Offensichtlich ist die Falle für Psylliden "unsichtbar", da diese die durchsichtige Falle offenbar nicht wahrnehmen können und dadurch zufällig dagegen fliegen. Zum anderen bewirkt der in Wesentlichen zylindrische Aufbau einen Fang von Tieren aus allen Himmelsrichtungen, so dass die Wahrscheinlichkeit für die in den Obstanlagen umherfliegenden Psylliden, zufällig an die Falle zu stoßen, besonders hoch ist. Die beleimte Außenfläche sorgt dann für den Fang. Dass trotz der großen beleimten Oberfläche so geringe Zahlen von Beifängen von Nützlingen im Vergleich zu konventionellen Gelbtafeln zu verzeichnen sind, liegt vor allem daran, das keine aktive Anlockung von Nützlingen durch die gelbe Farbe geschieht, welche bei Rebellfallen oder anderen Fallenarten üblich ist. Farbe ist insbesondere für Nutz-und Bestäubungsinsekten ein starkes Lockmittel. Wird der erfindungsgemäßen Falle noch ein gattungsspezifischer Lockstoff beigegeben, können die Fangzahlen der Schadorganismen weiter erhöht werden. Der gattungsspezifische Lockstoff spricht ebenfalls die anderen Nützlinge nicht an.

Die erfindungsgemäße Falle selbst soll primär zum Monitoring eingesetzt werden, um die Ankunft der migrierenden Arten zu bestimmen, den Populationsverlauf zu verfolgen und den passenden Bekämpfungszeitpunkt zu bestimmen. Eine erfolgreiche Bekämpfung der Vektoren von ESFY, AP und PD direkt mit der Falle (Massenfang) wäre ebenfalls möglich, wenn die Rückwanderung hoch-infektiöser Tiere in die Obstanlagen dadurch verhindert wird. Dabei kann auch bereits eine nur teilweise Reduktion der Population deutliche Auswirkungen auf die Zahl der Neuinfektionen der Obstbäume haben. Für eine umweltverträgliche Überwachung und Bekämpfung der Vektoren von Phytoplasmen gibt es einen großen Markt. Die Absatzregionen eines solchen Fallensystems entsprechen dabei den Anbaugebieten der Obstsorten.

### Bezugszeichenliste

- 1, 10, 100, 110: Falle
- 2: Deckel (Deckfläche)
- 3: Mantel (Außenfläche)
- 4: Unterseite, Boden (Deckfläche)
- 5: Loch
- 9: Aufhängung
- 11: Halterung
- 12: Dispenser

- r1: Radius Boden
- r2: Radius Deckel

## Patentansprüche

1. Falle für Blattflöhe, in Form eines Hohlkörpers, wobei der Hohlkörper mindestens eine Außenfläche aufweist, welche den Hohlkörper bildet, der Hohlkörper eine Öffnung an der Oberseite und eine Öffnung an der Unterseite aufweist, wobei die jeweiligen Öffnungen mittels weiterer Deckflächen verschließbar sind.

2. Falle, gemäß Anspruch 1, **dadurch gekennzeichnet, dass** die Falle aus transparentem Material besteht.

3. Falle, gemäß Anspruch 2, **dadurch gekennzeichnet, dass** das Material ausgewählt ist aus Glas, Polymethylmethacrylat (PMMA), Polyethylenterephthalat (PET), Polybutylenterephthalat (PBT), Polymethylpenten (PMP), Harnstoff-Formaldehydharz (UP), Polyetherimid (PEI), Polycarbonat (PC), Polyvinylchlorid (PVC), Polystyrol (PS), Polyphenylenether (PPE) und Polyethylen (PE).

4. Falle, gemäß einem der vorangehenden Ansprüche, **dadurch gekennzeichnet, dass** die Fläche der weiteren Deckfläche an der Oberseite der Falle größer ist als die Fläche der weiteren Deckfläche an der Unterseite der Falle.

5. Falle, gemäß Anspruch 1, **dadurch gekennzeichnet, dass** der Hohlkörper im Wesentlichen zylindrisch ausgestaltet ist und/oder dass die weiteren Deckflächen scheibenförmig ausgebildet sind.

6. Falle, gemäß Anspruch 1, **dadurch gekennzeichnet, dass** der Querschnitt des Hohlkörpers im Wesentlichen kreisförmig, oval, quadratisch, rechteckig, dreieckig, fünfeckig, sechseckig oder achteckig ausgestaltet ist und/oder dass die weiteren Deckflächen kreisförmig, oval, quadratisch, rechteckig, dreieckig, fünfeckig, sechseckig oder achteckig ausgebildet sind.

7. Falle, gemäß einem der vorangehenden Ansprüche, **dadurch gekennzeichnet, dass** die Außenfläche und/oder eine der weiteren Deckflächen mindestens eine lochartige Öffnung aufweist.

8. Falle, gemäß Anspruch 7, **dadurch gekennzeichnet, dass** der Durchmesser der zumindest einen lochartigen Öffnung 0,5 cm, bevorzugt 1 cm und besonders bevorzugt 1,5 cm beträgt.

9. Falle, gemäß einem der vorangehenden Ansprüche, **dadurch gekennzeichnet, dass** die Falle als Klebefalle ausgebildet ist.

10. Falle, gemäß Anspruch 9, **dadurch gekennzeichnet, dass** das Klebemittel an der mindestens einen Außenfläche des Hohlkörpers angeordnet ist.

11. Falle, gemäß Anspruch 9 oder 10, **dadurch gekennzeichnet, dass** das Klebemittel Insektenleim ist.

12. Falle, gemäß Anspruch 9 oder 10, **dadurch gekennzeichnet, dass** das Klebemittel als Mehrfachfolie ausgebildet ist, wobei jede der Folien der Mehrfachfolie mit Kleber bestückt ist.

13. Falle, gemäß einem der vorangehenden Ansprüche, **dadurch gekennzeichnet, dass** in dem Hohlkörper mindestens ein Lockstoffdispenser angeordnet ist, wobei der Lockstoffdispenser mindestens einen Riechstoff enthält.

14. Falle, gemäß Anspruch 13, **dadurch gekennzeichnet, dass** die Riechstoffe in dem Lockstoffdispenser gattungsspezifisch sind, wobei die gattungsspezifischen Riechstoffe zumindest zum Teil ausgewählt sind aus "Green Leaf Volatiles", "Green Leaf Volatiles" in Kombination mit linearen, verzweigten, gesättigten und/oder ungesättigten Hexanderivaten, ungesättigten Kohlenwasserstoffen, Terpenoiden und deren Derivaten, Sesquiterpenen und deren Derivaten, Alkohole sowie Mischungen der vorgenannten Riechstoffe.

15. Verwendung einer Falle, gemäß zumindest einem der Ansprüche 1 bis 14, zum Monitoring von Blattflöhen.
